# EUROPÄISCHE PATENTSCHRIFT

(11) **EP 3 098 019 B1**
(45) Veröffentlichungstag und Bekanntmachung des Hinweises auf die Patenterteilung: **25.09.2024**
(21) Anmeldenummer: 16171057.9
(22) Anmeldetag: 24.05.2016
(51) Int. Cl.: B23K 26/142, B23K 26/16

(54) **LASERSCHWEISSVORRICHTUNG MIT SPRITZERSCHUTZEINRICHTUNG**
LASER WELDING DEVICE WITH SPLASH PROTECTION DEVICE
DISPOSITIF DE SOUDAGE LASER COMPRENANT UN DISPOSITIF DE PROTECTION CONTRE LES PROJECTIONS

(30) Priorität: 27.05.2015 DE 202015102740 U
(43) Veröffentlichungstag der Anmeldung: 30.11.2016
(73) Patentinhaber: Bergmann, Uwe, 49326 Melle (DE)
(72) Erfinder: Bergmann, Uwe, 49326 Melle (DE)
(74) Vertreter: Ter Meer Steinmeister & Partner

(56) Entgegenhaltungen:
- EP-A1- 0 732 169
- WO-A1-2005/118210
- WO-A1-87/07862
- DE-A1- 10 226 359
- DE-A1- 102012 217 082
- DE-A1- 3 935 009
- JP-A- H03 110 094
- US-A1- 2005 109 745

## Beschreibung

Die Erfindung betrifft eine Laserschweißvorrichtung mit einer Schweißoptik zur Strahlformung eines auf ein Werkstück gerichteten Laserstrahls, und mit einer Spritzerschutzeinrichtung, die ein Gebläse und eine Düse zur Erzeugung eines Luftstromes in einem Raum zwischen der Schweißoptik und dem Werkstück aufweist, derart, dass der Luftstrom einer Ausbreitung von Schweißspritzern zur Schweißoptik entgegen wirkt, wobei die Düse den Laserstrahl ringförmig umgibt und einen radial einwärts und schräg in Richtung auf das Werkstück verlaufenden Austrittsspalt bildet und ein Kranz von Lüftungsöffnungen dazu vorgesehen ist, einen innerhalb der ringförmigen Düse zwischen der Schweißoptik und dem Austrittsspalt gebildeten Raum mit der Umgebungsluft zu verbinden.

Laserschweißvorrichtungen weisen häufig eine Laserstrahlquelle mit einer Leistung von 4 bis 8 kW auf. Ein Schweißkopf ist zumeist in einer oder mehreren Achsen beweglich an einem Roboterarm gehalten und weist eine Schweißoptik auf, durch die der Laserstrahl auf das Werkstück fokussiert wird. Beim Schweißen von beschichteten oder unbeschichteten Werkstücken aus Metall oder Kunststoff kommt es aufgrund der hohen Energiedichte des Laserstrahls oft zur Bildung von Schweißspritzern, d.h. schmelzflüssige Partikel werden weggeschleudert und/oder Verbrennungsrückstände oder Beschichtungen des Werkstücks führen zur Bildung von Schmauch oder Rauchgas. Diese Substanzen können leicht die Schweißoptik beschädigen oder verschmutzen. Die Schweißoptik wird deshalb zumeist durch ein Schutzglas geschützt. Auch dieses Schutzglas muss jedoch von hoher optischer Qualität sein und ist deshalb verhältnismäßig kostspielig, insbesondere bei scannenden Schweißvorrichtungen, bei denen der Laserstrahl über ein Spiegelsystem abgelenkt wird und demzufolge das Schutzglas einen relativ großen Durchmesser haben muss.

Um das Schutzglas seinerseits gegen Schweißspritzer zu schützen, damit es nicht so häufig ausgewechselt werden muss, ist es bekannt, in dem Raum zwischen dem Schweißkopf und dem Werkstück seitlich neben dem Laserstrahl eine sogenannte Luftklinge anzuordnen, durch die Druckluft über eine Schlitzdüse in Richtung auf den Laserstrahl abgegeben wird. Auf diese Weise wird zwischen der Schweißoptik und dem Werkstück ein Luftvorhang gebildet, der das Vordringen von Schweißspritzern und Gasen bis zur Schweißoptik verhindern soll. Zur Erzeugung des Luftvorhangs wird Druckluft mit einem Eingangsdruck von 500 bis 1000 kPa benötigt, und der Luftdurchsatz liegt in der Größenordnung von einigen 1000 Normlitern pro Minute. Das Druckluftsystem erfordert deshalb einen hohen Energieeinsatz und führt außerdem zu hohen Installations- und Wartungskosten.

Eine Vorrichtung dieser Art ist aus DE 10 2012 217082 A1 bekannt. Eine andere Laserschweißvorrichtung mit einer Spritzerschutzeinrichtung in der Form einer Ringdüse wird in DE 102 26 359 A1 beschrieben. Aus DE 102 26 359 A1 und JP H03 110094 A1 sind Vorrichtungen der eingangs genannte Art bekannt, bei denen der Luftstrom quer zum Laserstrahl gerichtet ist. In WO 2005/118210 A1 wird Material, das mit einem Laserstrahl von einem Werkstück abgetragen wird, durch einen wirbelförmigen Luftstrom in Richtung auf die Laserstrahlquelle abgesaugt. WO 87/07862, DE 39 35 009 A1 und EP 0 732 169 A1 beschreiben weitere Laservorrichtungen mit Strahldüsen.

Aufgabe der Erfindung ist es, eine Laserschweißvorrichtung mit einer verbesserten Spritzerschutzeinrichtung zu schaffen.

Diese Aufgabe wird erfindungsgemäß dadurch gelöst, dass dass der Austrittsspalt Drallschaufeln enthält und so gestaltet ist, dass die Luft von allen Seiten her radial auf die Achse der Schweißoptik trifft und in einen axial auf die Werkstückoberfläche gerichteten Luftwirbel umgelenkt wird und dann radial abströmt..

Durch den Austrittsspalt, der wahlweise auch durch eine Folge einzelner Austrittsöffnungen gebildet werden kann, wird die Luft von allen Seiten her radial auf die Achse der Schweißoptik und damit auf den Laserstrahl konzentriert. Da die Luftströme außerdem schräg in Richtung auf das Werkstück geneigt sind, werden sie beim Aufeinandertreffen auf der Achse der Schweißoptik in eine im wesentlichen axiale Richtung umgelenkt, so dass eine kräftige Luftströmung entsteht, die sich in Axialrichtung der Schweißoptik zu dem Werkstück bewegt und somit den vom Werkstück zurückgeschleuderten Schweißspritzern und Gasen entgegenkommt. Auf diese Weise lässt sich bereits mit verhältnismäßig geringem Luftdurchsatz und verhältnismäßig geringen Eingangsdrücken eine Ausbreitung der Schweißspritzer und Gase zur Schweißoptik wirksam verhindern. Ein zusätzlicher Vorteil ergibt sich daraus, dass die Luftströmung bis dicht an die Werkstückoberfläche heranreicht und erst dann radial abströmt, wodurch praktisch der gesamte Ausbreitungsweg des Laserstrahls von Rauch und heißen Gasen freigehalten wird, die leicht zu einer Defokussierung und/oder Absorption des Laserstrahls führen könnten. Die Lüftungsöffnungen ermöglichen einen Druckausgleich in dem von der Düse umgebenden Raum. Auf diese Weise wird verhindert, dass in diesem Raum aufgrund des Soges der von der Düse erzeugten Luftströmung ein Unterdruck entsteht, durch den schmutzbeladene Luft zur Schweißoptik hin angesaugt werden könnte.

Durch die Drallschaufeln wird die Konzentration der Luftströmung auf die Achse des Laserstrahls verbessert, und es entsteht ein längs dieser Achse verlaufender Luftwirbel, in dem hohe Strömungsgeschwindigkeiten auftreten, die die Ausbreitung von Spritzern und Gasen zur Schweißoptik wirksam verhindern.

Ein besonderer Vorteil der Erfindung besteht darin, dass zur Erzeugung einer ausreichenden Luftströmung keine Druckluft benötigt wird, sondern ein einfaches Gebläse genügt. Dadurch lassen sich die Energiekosten für die Drucklufterzeugung um bis zu 90% senken, und auch Installations- und Wartungskosten werden in erheblichem Umfang eingespart.

Das Gebläse, aus dem die Ringdüse gespeist wird, hat verhältnismäßig geringe Abmessungen und ein verhältnismäßig geringes Gewicht und kann deshalb unmittelbar am Schweißkopf bzw. an dem Roboterarm angebracht werden, der den Schweißkopf trägt. Der Schweißkopf braucht deshalb nicht über flexible Leitungen mit der Luftquelle verbunden zu sein, wodurch die Bewegungsfreiheit des Schweißkopfes erhöht und eine präzise und störungsfreie Steuerung der Bewegungsabläufe ermöglicht wird. Außerdem entfallen Wartungskosten für den Ersatz der verschleißanfälligen flexiblen Druckluftleitungen.

Im folgenden werden Ausführungsbeispiele anhand der Zeichnung näher erläutert.

Es zeigen:
- Fig. 1: einen axialen Schnitt durch einen Laserschweißkopf mit einer Spritzerschutzeinrichtung;
- Fig. 2: einen Schnitt längs der Linie II - II in Fig. 1; und
- Fig. 3: einen axialen Schnitt durch einen Laserschweißkopf mit einer Spritzerschutzeinrichtung gemäß einem anderen Ausführungsbeispiel.

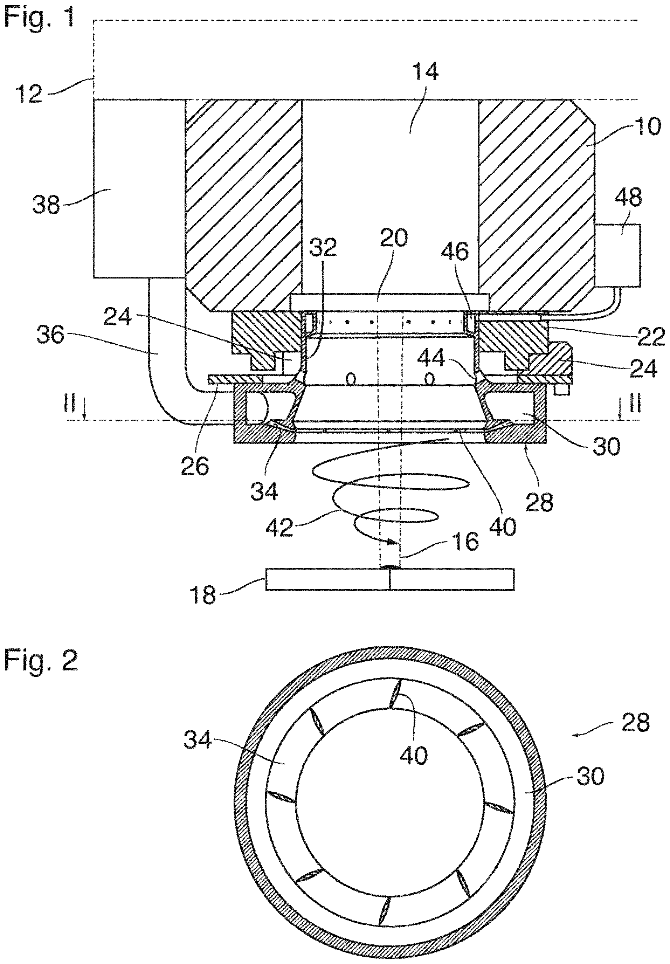

Die in Fig. 1 gezeigte Laserschweißvorrichtung weist einen Schweißkopf 10 auf, der am ende eines Roboterarmes 12 montiert ist und eine nur schematisch gezeigte Schweißoptik 14 enthält, mit der ein Laserstrahl 16, der von einer hier nicht gezeigten Laserstrahlquelle erzeugt wird, auf ein Werkstück 18 fokussiert wird. Gegen Schweißspritzer und Rauch und Dämpfe, die beim Schweißen des Werkstücks 18 entstehen können, ist die Schweißoptik 14 durch ein Schutzglas 20 geschützt, das mit Hilfe eines Ringflansches 22 auswechselbar an der Stirnseite des Schweißkopfes 10 gehalten ist. An dem Ringflansch 22 ist mit Hilfe von auf den Umfang verteilten Haltern 24 ein Tragring 26 befestigt, an dem eine Düse 28 gehalten ist, die den Laserstrahl 16 ringförmig umgibt. Die Düse weist einen Ringkanal 30 auf, von dem auf der vom Werkstück 18 abgewandten Seite ein ringförmiger Stutzen 32 ausgeht, der in den Ringflansch 22 eingreift. Vom Inneren Umfang des Ringkanals 30 geht ein ringförmiger Austrittsspalt 34 aus, der radial nach innen und unter einem Winkel von etwa 20° schräg auf das Werkstück 18 gerichtet ist und sich im Querschnitt nach außen etwas verjüngt.

Der Ringraum 30 ist über eine Zufuhrleitung 36 mit einem Gebläse 38 verbunden, das außen an dem Schweißkopf 10 gehalten ist. Von dem Gebläse 38 wird ein Luftstrom erzeugt, der sich in dem Ringraum 30 verteilt und über den Austrittsspalt 34 von allen Seiten gleichmäßig in Richtung auf die Achse der Schweißoptik 14 und damit auf den Laserstrahl 16 abgegeben wird.

Wie deutlicher in Fig. 2 zu erkennen ist, sind in dem Austrittsspalt 34 Drallschaufeln 40 angeordnet, die den austretenden Luftstrom verdrallen, so dass in dem Raum zwischen der Düse 28 und dem Werkstück 18 ein Luftwirbel 42 gebildet wird. In diesem Luftwirbel 42 wird die von allen Seiten konvergierend einströmende Luft in Axialrichtung der Laseroptik 14 abgelenkt, so dass eine kräftige verdrallte Luftströmung entsteht, die sich längs des Laserstrahls 16 zu dem Werkstück 18 ausbreitet und erst an der Werkstückoberfläche radial abströmt. Durch diese Luftströmung werden Schweißspritzer sowie Rauch und Gase, die sich in Richtung auf das Schutzglas 20 ausbreiten, wirksam zurückgehalten und nach außen abgeführt, so dass sie das Schutzglas 20 nicht erreichen.

In dem zylindrischen Stutzen 32 der Düse 28 ist ein Kranz von Lüftungsöffnungen 44 gebildet. Zwischen dem Ringflansch 22 und dem Tragring 26 besteht in den Zwischenräumen zwischen den Haltern 24 ein Spalt, so dass Umgebungsluft durch diesen Spalt und über die Lüftungsöffnungen 44 in dem Raum im Inneren der Düse 28 und oberhalb des Austrittsspaltes 34 einströmen kann. Auf diese Weise wird die Entstehung eines Unterdrucks in diesem Raum verhindert und somit vermieden, dass schmutzbeladene Luft von der Unterseite der Düse 28 her angesaugt wird und einen Schmutzniederschlag auf dem Schutzglas 20 bildet.

Im gezeigten Beispiel ist am oberen Ende des Stutzens 32, unmittelbar angrenzend an das Schutzglas 20 ein Ringkanal 46 vorgesehen, in den von einem Luftreinigungsaggregat 48 gereinigte und getrocknete Luft zugeführt wird. Diese Luft wird über eine poröse innere Umfangswand des Ringkanals 46 oder über kleine Auslassdüsen in den Raum unterhalb des Schutzglases 20 abgegeben, um die Gefahr einer Verschmutzung oder des Beschlagens des Schutzglases weiter zu verringern.

In einem praktischen Beispiel hat das Gebläse 38 eine Nennleistung von 1600 Watt und eine Luftleistung von bis zu 35 l/s. Damit kann in dem Austrittsspalt 34 eine Luftgeschwindigkeit von etwa 600 km/h erreicht werden. Mit dieser Geschwindigkeit tritt die Luft in den Luftwirbel 42 ein, so dass eine wirksame aerodynamische Abschirmung des Schutzglases 20 erreicht wird. Die mit hoher Geschwindigkeit aus dem Austrittsspalt 34 austretende Luft bildet in dem Raum, der den Laserstrahl 16 umgibt, einen konischen Luftvorhang, der das Eindringen von Verunreinigungen in den Stutzen 32 verhindert und der dann auf der Achse des Laserstrahls 16 in den Luftwirbel 42 übergeht. Im Wirbelkern dieses Luftwirbels wird eine sehr hohe Strömungsgeschwindigkeit erreicht, so dass heiße Gase und Verunreinigungen wirksam aus der Zone ferngehalten werden, in der sich der Laserstrahl 16 ausbreitet. Um eine vergleichbare Abschirmungswirkung mit Hilfe Druckluft-Luftklingen zu erreichen, würde ein Kompressor mit einer Nennleistung von 40 kW und einer Luftleistung von 5000 l/min benötigt.

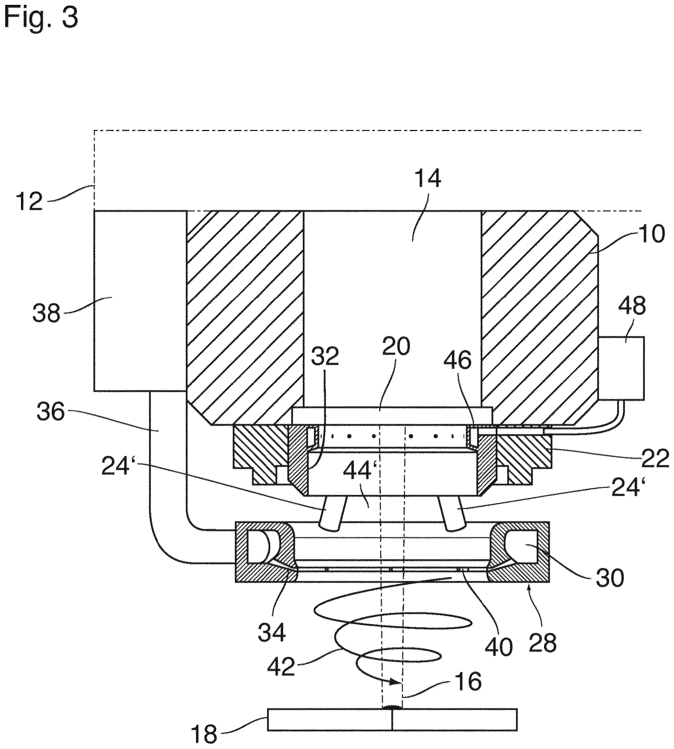

Fig. 3 zeigt ein Ausführungsbeispiel, bei dem die Düse 28 getrennt von dem Stutzen 32 ausgebildet und in größerem Abstand zu diesem angeordnet ist. Die Düse 28 ist an dem Stutzen 32 durch au dem Umfang verteilte Halter 24' gehalten, zwischen denen Lüftungsöffnungen 44' gebildet sind die einen sehr großen Querschnitt haben und einen ungehinderten Eintritt von Umgebungsluft in den Raum oberhalb des Ringspaltes 34 ermöglichen.

## Patentansprüche

1. Laserschweißvorrichtung mit einer Schweißoptik (14) zur Strahlformung eines auf ein Werkstück (18) gerichteten Laserstrahls (16), und mit einer Spritzerschutzeinrichtung, die ein Gebläse (38) und eine Düse (28) zur Erzeugung eines Luftstromes (42) in einem Raum zwischen der Schweißoptik (14) und dem Werkstück (18) aufweist, derart dass eine kräftige Luftströmung entsteht, die sich in Axialrichtung der Schweißoptik bewegt und somit den vom Werkstück zurückgeschleuderten Schweißspritzern und Gasen entgegenkommt, wobei die Düse (28) den Laserstrahl (16) ringförmig umgibt und einen radial einwärts und schräg in Richtung auf das Werkstück (18) verlaufenden Austrittsspalt (34) bildet und Lüftungsöffnungen (44, 44') dazu vorgesehen sind, dass Umgebungsluft über die Luftöffnungen (44,44') in dem zwischen der Schweißoptik (14) und dem Austrittspalt (34) gebildeten Raum im Inneren der Düse (28) und oberhalb des Austrittspalt (34) einströmen kann, **zeichnet,** dass der Austrittsspalt (34) Drallschaufeln (40) enthält und so gestaltet ist, so dass in dem Raum zwischen der Düse (28) und dem Werkstück (18) ein Luftwirbel (42) gebildet wird, wobei die von allen Seiten konvergierend einströmende Luft in Axialrichtung der Laseroptik (14) abgelenkt wird, so dass eine kräftige verdrallte Luftströmung entsteht, die sich längs der Laserstrahls (16) zu dem Werkstück (18) ausbreitet und erst an der Werkstückoberfläche radial abströmt.

2. Laserschweißvorrichtung nach Anspruch 1, bei der die Düse (28) einen Ringraum (30) aufweist, der eine Zufuhrleitung (36) des Gebläses (38) mit dem Austrittsspalt (34) verbindet.

3. Laserschweißvorrichtung nach Anspruch 2, bei der die Schweißoptik (14) in einem Schweißkopf (10) gebildet ist und das Gebläse (38) an dem Schweißkopf (10) und/oder einem Roboterarm (12) angeordnet ist, der den Schweißkopf (10) trägt.

4. Laserschweißvorrichtung nach einem der vorstehenden Ansprüche, bei der die Schweißoptik (14) in einem Schweißkopf (10) aufgenommen ist und die Düse (28) unmittelbar an dem Schweißkopf (10) gehalten ist.

5. Laserschweißvorrichtung nach Anspruch 4, bei der die Düse (28) unmittelbar angrenzend an die Schweißoptik (14) eine Einrichtung zur Abgabe von gereinigter und/oder getrockneter Luft auf die Schweißoptik oder ein diese abdeckendes Schutzglas (20) aufweist.

## Claims

1. A laser welding device comprising an optical system (14) for shaping a laser beam (16) that is directed onto a workpiece (18), and a splash protection device including a blower (38) and a nozzle (28) for creating an air current (42) in a space between the optical system (14) and the workpiece (18) such that a powerful air current is formed that moves in axial direction of the optical system and thus opposes rebound splashes and gases, the nozzle (28) surrounding the laser beam (16) in an annular configuration and forming an exit gap (34) that extends radially inwards and obliquely in the direction towards the workpiece (18), wherein vent openings (44, 44') are provided for allowing the entry of ambient air via the vent openings (44, 44') into the space formed between the optical system (14) and the exit gap (34) inside of the nozzle (28) and above the exit gap (34), **characterized in that** the exit gap (34) contains swirl blades (40) and is configured such that an air vortex (42) is formed in the space between the nozzle (28) and the workpiece (18), wherein the inflowing air converging from all sides is deflected into the axial direction of the optical system (14), thereby forming a powerful swirling air current that propagates along the laser beam (16) towards the workpiece (18) and only flows off radially when reaching the surface of the workpiece.

2. The laser welding device according to claim 1, wherein in the nozzle (28) has an annular space (30) connecting a supply line (36) of the blower (38) to the exit gap (34).

3. The laser welding device according to claim 2, wherein the optical system (14) is formed in a welding head (10) and the blower is mounted to the welding head (10) and/or a robot arm (12) carrying the welding head (10).

4. The laser welding device to any of the preceding claims, wherein the optical system (14) is accommodated in a welding head (10) and the nozzle (28) is directly mounted to the welding head (10).

5. The laser welding device according to claim 4, wherein the nozzle (28) has, immediately adjacent to the optical system (14), a device for dispensing cleaned and/or dried air onto the optical system and/or a protection pane (20) covering the same.

## Revendications

1. Dispositif de soudage au laser ayant une optique de soudage (14) pour la conformation de faisceau d'un faisceau laser (16) dirigé vers une pièce (18), et ayant un dispositif de protection contre les projections qui comporte un ventilateur (38) et une buse (28) pour générer un flux d'air (42) dans un espace entre l'optique de soudage (14) et la pièce (18), de telle sorte qu'est créé un puissant écoulement d'air qui se déplace dans une direction axiale de l'optique de soudage et arrive ainsi dans le sens inverse des projections de soudage et des gaz qui sont projetés par la pièce,
dans lequel la buse (28) entoure le faisceau laser (16) de manière circulaire et forme un interstice de sortie (34) s'étendant radialement vers l'intérieur et obliquement en direction de la pièce (18), et des orifices de ventilation (44, 44') sont prévus de telle sorte que l'air ambiant peut entrer par écoulement à travers les orifices d'air (44, 44') dans l'espace formé entre l'optique de soudage (14) et l'interstice de sortie (34) à l'intérieur de la buse (28) et au-dessus de l'interstice de sortie (34),
**caractérisé en ce que** l'interstice de sortie (34) contient des ailettes de tourbillonnement (40) et est configuré de telle sorte qu'un tourbillon d'air (42) est formé dans l'espace entre la buse (28) et la pièce (18), dans lequel l'air entrant par écoulement de tous les côtés et de manière convergente est dévié dans la direction axiale de l'optique laser (14), de sorte qu'est créé un puissant écoulement d'air tourbillonnant qui se diffuse le long du faisceau laser (16) jusqu'à la pièce (18) et s'échappe d'abord radialement au niveau de la surface de pièce.

2. Dispositif de soudage au laser selon la revendication 1, dans lequel la buse (28) comporte un espace annulaire (30) qui relie une conduite d'alimentation (36) du ventilateur (38) à l'interstice de sortie (34).

3. Dispositif de soudage au laser selon la revendication 2, dans lequel l'optique de soudage (14) est formée dans une tête de soudage (10) et le ventilateur (38) est agencé sur la tête de soudage (10) et/ou un bras de robot (12) qui porte la tête de soudage (10).

4. Dispositif de soudage au laser selon l'une des revendications précédentes, dans lequel l'optique de soudage (14) est reçue dans une tête de soudage (10) et la buse (28) est directement maintenue sur la tête de soudage (10).

5. Dispositif de soudage au laser selon la revendication 4, dans lequel la buse (28) directement adjacente à l'optique de soudage (14) comporte un dispositif pour fournir de l'air épuré et/ou séché à l'optique de soudage, ou un verre de protection (20) recouvrant celle-ci.
